# EUROPEAN PATENT APPLICATION

(11) **EP 1 971 103 A1**
(43) Date of publication of application: **17.09.2008**
(21) Application number: 07251085.2
(22) Date of filing: 15.03.2007
(51) Int. Cl.: H04L 29/06

(54) **Wireless communications**

(71) Applicant: BRITISH TELECOMMUNICATIONS public limited company, London EC1A 7AJ (GB)
(72) Inventor: Cofta, Piotr, Leon, Ipschwitch, Suffolk IP5 2WX (GB); Mallet, Colin Thomas, Saxmundham Suffolk IP 17 1PP (GB)
(74) Representative: Lidbetter, Timothy Guy Edwin

(57) **Abstract**

On initial connection between a terminal 21 and an authentication server 29 by way of an intermediate access hub 23, a session key Ks is generated (67), and transmitted to the hub from the server. When a communications connection is to be established between the terminal and the access hub, requiring further authentication, the terminal transmits the session key to the hub (70), to be compared with the counterpart previously stored in the hub. This arrangement allows the hub to be configured on request from the terminal without further reference to the server

## Description

This invention relates to wireless communications systems, and in particular to systems by means of which mobile devices can gain access to communications networks through a local access hub.

It is the goal of the information technology industry to provide universal access to any application or content, with any type of device, from any location, using any fixed, mobile or wireless network. To achieve this, a mobile device would need to automatically identify the best network for a particular location and service, and be capable of connection to that network in the optimum way. This requires automatic and transparent authentication, along with provision to support identity and personalisation of the services to be used.

Many operators are now providing services using standards such as the "Wi-fi" IEEE 802.11 standard. Any operator can establish a wi-fi access point or hub, but in general only one operator's access point will be available at any location. The hubs are connected to other applications, and in particular the user's service provider, through a core network. This allows users of mobile devices subscribing to different operators to communicate with each other, and also with fixed networks. A user can therefore access the same services through any available access hub.

The device may automatically 'wake up' when it detects the presence of radio signals in a Wi-fi enabled zone and authenticate to the network without the need for any action on behalf of the user. Alternatively, many such devices also have a capability to connect to a cellular network, allowing access (albeit with more limited bandwidth) over the cellular network when no wi-fi connection is available.

For security of data, and to prevent misuse of the user's account, many services require the transmission of access control data, referred to herein as a session key, from the user terminal to the service provider's server, to ensure that the terminal attempting access is authorised to receive the service or data requested. The need to exchange such data with the service provider's server can cause signalling overheads and delays in the provision of services, as the access hub cannot provide the service until the authorisation has been confirmed. The present invention provides a method of streamlining this process.

According to the present invention, there is provided a method of establishing a communications connection between a terminal and an access hub, wherein the terminal issues a session key to a hub, to be compared with a counterpart stored in the hub, and wherein the session key stored in the hub is generated by a server in response to an initial connection between the terminal and the server, and transmitted to the hub from the server. This key can be used to authorise hub configuration changes such as port settings or bandwidth reservation. This might be used to enable the hub to co-operate with the user device to support a connection suited for a particular application such as VoIP. Any number of these settings could be contained in the user device, along with a secret key, so in essence a general purpose hub can be virtualised, with settings changed every time a user switches between applications. The ability of the terminal to instruct the local hub without reference to the authentication server except at initial contact simplifies operation compared to prior art arrangements, in which the hub must clear every request with some central authority.

Once it has been authenticated, it is the terminal (in practice, the user device (card) inserted into the handset) that verifies all its own application requests, being effectively the local enforcer of policies.

To speed up application set-up times, one or more frequently-used 'virtual hub settings' held on the terminal may be pushed to the hub during the initial authentication process.

The settings are preferably encoded in the terminal on a removable device, and in the absence of the removable device the hub co-operates with the user device in a standard default configuration. If the removable device is subsequently plugged into another terminal, it automatically re-configures the hub to suit its requirements. The invention therefore allows a secure network authentication.

In order to accommodate fading and other radio phenomena, the server may select a group of hubs to which it sends its copy of the session key, so that more complex handover routines can take place in a secure environment. Similarly, some latency and windowing can be built into the process so that users can maintain communications during periods of high error rates.

The invention also extends to the various individual elements that co-operate to perform the invention. In particular, it relates to communications server equipment for controlling access to telecommunications services, comprising means for storing access codes associated with individual co-operating terminals, means for receiving a request from an access hub for authorisation for access for a terminal, and means for transmitting a session code to the hub for storage by the hub and by the terminal. It may transmit a session code to a plurality of access hubs.

The invention also extends to a communications access hub, comprising means for enabling communications between one or more terminals and a network, means for receiving a session key from a communications server, means for storing the session key, means for receiving a session key from a terminal, means for comparing the stored session key with the session key received from the terminal, and means for establishing communications between the terminal and the network if the session keys correspond. The hub preferably has means for configuring the hub in accordance with the nature of the communications connection to be established. It may comprise means for storing one or more configuration settings received from the server with the session key, and means for retrieving the settings on receipt of instructions from the terminal. There may also be a default configuration for establishment of communications with a terminal in the absence of the session key.

Finally, the invention also extends to a communications terminal device, which may be a component such as a stored memory card transferable between communications handsets comprising means establishing an initial authentication process between the terminal and the server, means for receiving a session key from the server, means for storing the session key, means for transmitting the stored session key to an access hub to establish a communications connection between the terminal and the access hub. The device may be capable of storing a plurality of settings, and of transmitting instructions to the hub to be configured for co-operation with the user device for different applications. One of the stored settings may be transmitted to the hub during the initial authentication process. The device may also be configured to transmit the session key to a hub with which it is coming into contact, for example during a handover, such that session control continues without restarting the authentication process with the server.

An embodiment of the invention will now be further described, by way of example, with reference to the drawings, in which
Figure 1 is a schematic diagram of a terminal, illustrating the interfaces between the various functional elements
Figure 2 is a schematic diagram of a Secure Memory Card
Figure 3 is a schematic diagram illustrating the elements which co-operate to form an embodiment of the invention
Figure 4 is a flow diagram illustrating the exchanges of data that take place in the performance of the invention.

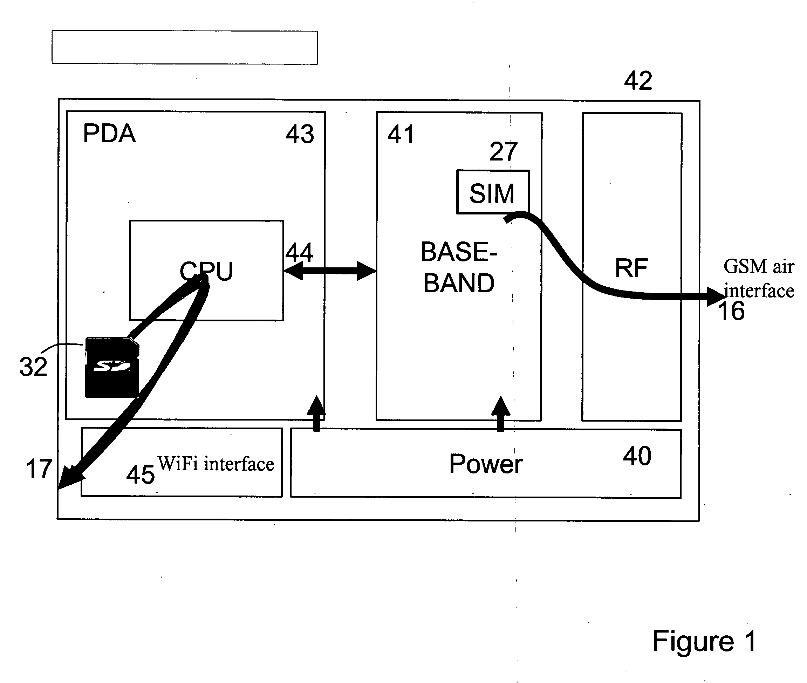

Figure 1 shows the architecture of a mobile handset/PDA 21. This block diagram is for illustration purposes only - typically all components (except the removable SIM and SD cards 27, 32 to be discussed below) are integrated into a single chip. The basic functional modules are a power supply 40, the cellular functions at baseband 41 and at radio frequency 42, and a personal data application (PDA) operating system 43.

This handset 21 has provision for two removable modules 27, 32 containing electronic chips. One of these is a SIM (subscriber identity module) 27 issued by a cellular telephone network operator to allow access to that network, and co-operating with the functional module 41 controlling cellular telephony. In the present embodiment the SIM 27 co-operates conventionally with the cellular network and will not be discussed in detail.

Because the SIM 27 was originally developed as a cellular radio interface security platform, it is associated with the cellular radio module 41 and hidden from the PDA operating system 43. This provides difficulties for PDA applications which need to interface to the SIM card. However, many portable electronic devices now have provision for another removable digital storage medium 32 known as a SD ("Secure digital") card, which can be used for applications ranging from MP3 players to PDAs and digital cameras. The "secure" part refers to support of DRM (digital rights management) copyright protection and the industry-wide SD Card Association aims to establish technical and specification standards and promote it as the de-facto industry standard. Devices (for example most camera phones) are now becoming available with card slots. There are several versions of SD card emerging. Reduced size versions are the Mini SD and the Micro SD together with adapters for use in SD slots. There is also the MMC (multi-media card) and RSMMC (Reduced Size Multi Media Card) version based on 'open' standards. These will normally fit into the corresponding SD slots.

In this specification we shall use the term "SMC" (Secure Memory Card) to refer to any such combined memory and smart card variant. The SMC is a combination of the tamper-proof silicon technology of the UICC (universal Integrated Circuit card) with removable flash memory storage. The SMC can support secure authentication and storage of applications and information, and allow the development of the "office on a card".

One potential application of such cards is to provide access control to a wireless network through a *Wi-fi external interface 45.* The client software runs on the CPU 44 of the processor 43, and accesses the user's identity code and refers security challenges to a secure key Ki held on the card 32. The advantage of is that there is a well established high speed interface between the two entities. Note that for security reasons the key Ki is never transmitted by the card, though a session key derived from it can be generated as required. It should be noted that the SMC 32 co-operates with the PDA function 43 of the device 21, and is separate from the SIM 27 (subscriber identity module) issued by a cellular operator to provide access to the cellular network, so a device such as that illustrated, when fitted with both a SIM 27 and a SMC 32, is capable of two separate secure token-based authentications. The mobile operator's SIM 27 will automatically authenticate to the cellular network whilst the SMC 32 can be used independently for authentication to functionally and commercially separate network resources and service platforms reached by any converged access mechanism - wireless, cellular or fixed broadband networks.

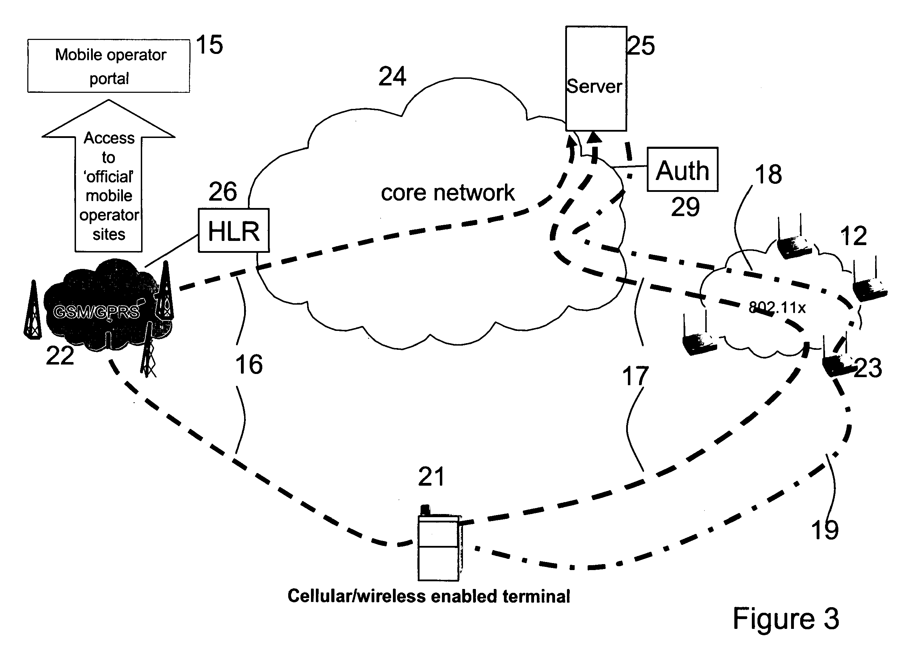

The device 21 can be programmed such that every time a user roams into a Wi-fi enabled zone 12, it automatically transfers from the cellular path 16 to a Wi-fi data path 17. (See Figure 3) It should be noted that the use of Wi-fi is only an illustration and it could equally be any other suitable data path.

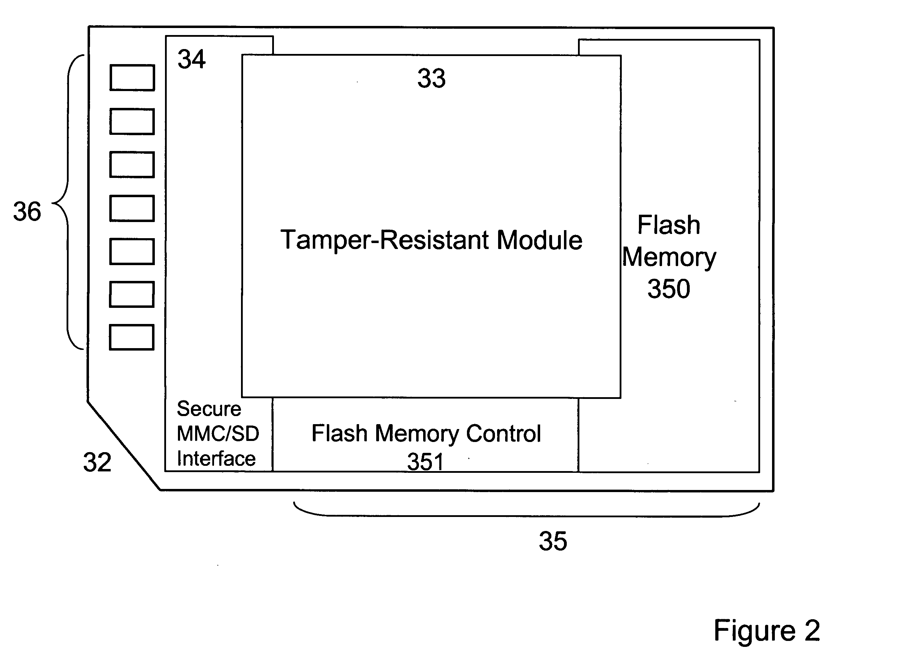

Figure 2 shows the architecture of a secure memory card 32 (SMC). The SMC would typically be a multi-chip module combining the functions of a memory card with those of a smart card: more specifically it combines the functions of an MMC/SD card with those of a SIM, but there is only one set of connectors 36 that is used to access either 'SIM' or memory through a controller processor 34 that acts as a gateway to direct signals either to a a driver chip 33 embodied as a Universal Integrated Circuit Card (UICC) or to a Flash Memory unit 35 comprising a memory chip 350 and associated control 351. The SIM function can access the memory, and it can control access to some parts some parts by encryption or by blocking and unblocking.

Figure 3 shows a Cellular/wireless enabled terminal 21 having the capability to connect either to a base station of a cellular network 22 or to a "wi-fi" network 12. Both networks 22, 12 afford access through a core network 24 to a service provider's HSS 25. The cellular network 22 also provides access to its own portal 15. Authentication of subscriber credentials is carried out by an authentication platform known as a home location register (HLR) 26 associated with the cellular network. Access to the server 25 is controlled by a second authentication platform 29 associated with the core network 24

The hub 23 might be a home Wi-fi router or local cellular base station, and provides functionality at the edge of the network. It would normally be managed either locally or by a secure connection to a network-based server. The hub may have a range of settings which define how it interfaces with individual mobile devices as well as with the network, Examples might be port settings or bandwidth reservation, for example to make a connection suitable for a particular application such as VoIP. The hub 23 also sets certain security policies (e.g. has a firewall) so that not all kinds of connections are allowed.

Referring to Figure 3, first consider a situation in which the only connection 16 available to the user device 21 is through the cellular network 22. When the user switches on his device 21, the mobile operator's SIM 27 in the device authenticates the device to the mobile network 22. Given appropriate subscription and/or permissions, the device 21 can establish a connection to the cellular operator's own portal 15, and also, by way of the core network 24, an 'off portal' connection 16 to the HSS 25, via for example a roaming gateway. A second SIM carried on the handset (or additional functionality on the existing SIM) may supply the credentials for the second challenge/response authentication needed to access the HSS 25 through the authentication platform 29. If successful, the device 21 is now independently authenticated to both the cellular network 22 and the core network 24 via a GPRS/3G mobile connection.

The wi-fi capability of the handset 21 can be activated using an SMC 32, giving access 17 through a wireless hub 23 independently of the cellular network 22. The mobile device 21 is, for example, a mobile phone, PDA (personal digital assistant) or laptop. The mobile device renders services, collects user inputs and provides a human interface or display. It also has a processor allows it to execute programmes. Additional data storage for the mobile device 21 can be provided by the SMC card 32.

The SMC 32 contains a UICC module 33 which allows it to operate in a manner similar to the SIM 27 to provide a set of secure credentials which can be accessed by the mobile device 21 and exchanged with the server 25 to carry out authentication and cryptographic functions independently of the SIM 27. These credentials include a unique identifier (known as an IMSI) and secret key Ki.

The SMC 32 therefore provides an access means 17 to the server 25, independent of the cellular network 22.

The method of connection through the hub 23 using the SMC 32 will now be discussed. As previously discussed, Figure 3 depicts a mobile device 21, incorporating an SMC 32, connected to a server 25 through an access network 22, a hub 23 and a core network 24 under the control of the authentication platform 29. On power-up the mobile device 21 communicates with the core network 24 using the optimum access mechanism 22 of those methods 16, 17 available to it, which in the scenario to be discussed is a connection 17 through the wi-fi hub 23. If an SMC card 32 is present in the device 21, encrypted communication 17 is established between the control processor 34 and the service authentication function 29, associated with the server 25Authentication of this connection is made by the platform 29 using the coded credentials carried on the SMC 32Figure 3 also shows a second secure connection 18 established between the network-based server 25 and the hub 23. This, together with the secure connection 17 established between the server 25 and the SMC 32 in the terminal 21, allows a user to access a facility in the server 25 to configure the hub 23, by creating a further secure connection 19 between the SMC card 32 and the hub 23. This arrangement allows the hub to be configured on a per-application, per-session basis.

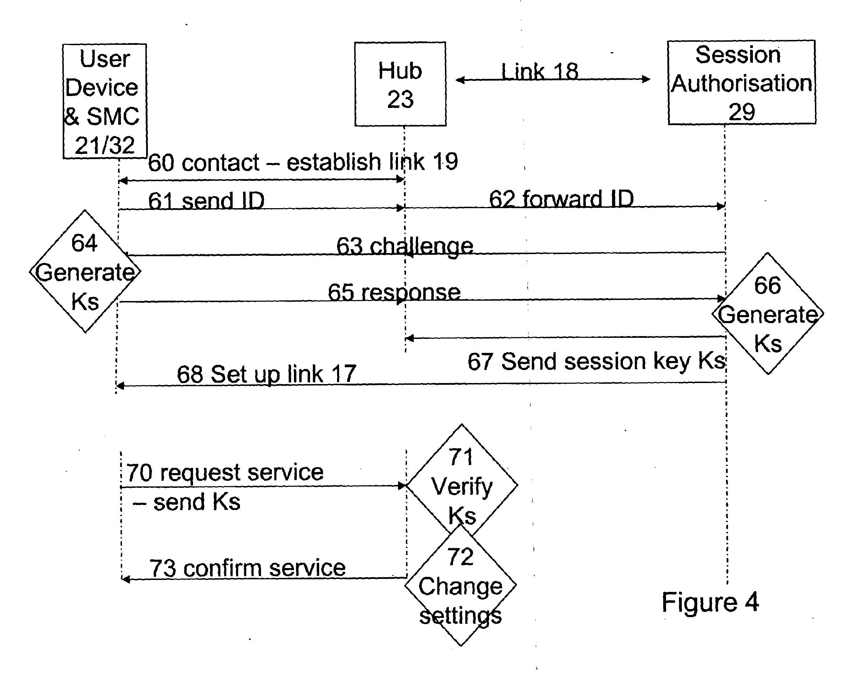

The authentication process is shown in Figure 4. On initial contact (step 60), a secure link 19 is set up between the user device 21 and the hub 23. The SMC 32 transmits an identity code (step 61) to the hub, and the hub forwards this code to the Authentication server 29 (step 62), which then sends a challenge 63 to the SMC 32 through the hub 23. The SMC generates a response 65 to this challenge and the authentication server 29 verifies the response. If the response is valid, the authentication server 29 generates a session key Ks (66) and transmits it to the hub 23 (step 67) over a connection 18; an identical key is generated by the SMC 32 (step 64) as an outcome of the authentication process. This can take place automatically without any user intervention. The secure connection 17 between the user 21 and the server 25 has now been established (step 68).

Ks is calculated from the secret key Ki held on the card 32 during the initial authentication process. This key Ki is never transmitted, but is known only to the card 32 and to the authentication server 29.

Once the key Ks is sent to the hub 23, the device 21 can now access additional services without further reference to the authentication function 29. Settings can be stored on the SMC card 32 allowing the user of the device 21 to request additional access to the network, for example a Voice over Internet Protocol (VoIP) service, requiring the hub 23 to be configured. If a user selects such an application, the SMC 32 may, at this stage, verify that this request is valid according to its own programming (for example no call-barring function has been applied to prevent unauthorized use should the handset fall into the wrong hands). Subject to this, the SMC 32 transmits a request 70 to the hub 23 over the secure connection 19 to modify settings, authenticating itself with the session key Ks. The hub 23, receiving the request accompanied by the session key Ks, verifies the key (71) and adopts the required settings (72) to meet this request, before transmitting confirmation (73) that the request has been acted upon.

If additional applications require different configurations, the SMC 32 can send further settings (7) to the hub 23 as the applications are invoked, because the hub already holds the 'expected value' of the session key Ks. In essence, each of these configurations can be regarded as 'virtual hubs' which are suspended or activated as the user dictates.

Once the session is completed or when the device moves out of range, both the user device 21 and the hub 23 restore their original settings.

To speed up application set-up times, one or more frequently-used 'virtual hub settings' held on the card 32 may be pushed to the hub 23 during the initial authentication process 61. If the user 21 moves out of range of a particular hub 23, the session comes to an end. The hub then reverts to its default configuration and the 'virtual hubs' disappear.

In order to accommodate fading and other radio phenomena, the server 25 may contain an algorithm which selects a group of hubs to which it sends its copy of Ks, so more complex handover routines can take place in a secure environment. Similarly, some latency and windowing can be- built into -the process so that users can maintain communications during periods of high error rates.

## Claims

1. A method of establishing a communications connection between a terminal and an access hub, wherein the terminal issues a session key to a hub, to be compared with a counterpart stored in the hub, and wherein the session key stored in the hub is generated by a server in response to an initial connection between the terminal and the server, and transmitted to the hub from the server.

2. A method according to claim 1, wherein acceptance of the session key authorises changes to configuration of the hub.

3. A method according to claim 2, wherein a plurality of settings are stored in the user device, for transmission of instructions to the hub to be configured for co-operation with the user device for different applications.

4. A method according to claim 3, wherein one or more settings held on the terminal are transmitted to the hub during the initial authentication process.

5. A method according to any preceding claim, wherein the settings are encoded in the terminal on a removable device, and wherein in the absence of the removable device the hub co-operates with the user device in a default configuration.

6. A method according to any preceding claim, wherein on initial establishment of hub configuration, the server transmits the session key to a plurality of hubs, such that if the user device establishes contact with any one of the hubs or transfers from one hub to another, the session control continues without restarting the authentication process with the server

7. Communications server equipment for controlling access to telecommunications services, comprising means for storing access codes associated with individual co-operating terminals, means for receiving a request from an access hub for authorisation for access for a terminal, and means for transmitting a session code to the hub for storage by the hub and by the terminal

8. Communications server equipment according to claim 7, comprising means for transmitting the session code to a plurality of access hubs.

9. A communications access hub, comprising means for enabling communications between one or more terminals and a network, means for receiving a session key from a communications server, means for storing the session key, means for receiving a session key from a terminal, means for comparing the stored session key with the session key received from the terminal, and means for establishing communications between the terminal and the network if the session keys correspond.

10. A communications access hub according to claim 9, having means for configuring the hub in accordance with the nature of the communications connection to be established.

11. A communications access hub according to claim 10, comprising means for storing one or more configuration settings received from the server with the session key, and means for retrieving the settings on receipt of instructions from the terminal.

12. A communications access hub according to claim 10, having a default configuration for establishment of communications with a terminal in the absence of the session key

13. A communications terminal device comprising means establishing an initial authentication process between the terminal and the server, means for receiving a session key from the server, means for storing the session key, means for transmitting the stored session key to an access hub to establish a communications connection between the terminal and the access hub.

14. A communications terminal device according to claim 13, comprising means for storing a plurality of settings, and means for transmission of instructions to the hub to be configured for co-operation with the user device for different applications.

15. A communications terminal device according to claim 14, comprising means for transmitting one or more of the stored settings held on the terminal to the hub during the initial authentication process.

16. A communications terminal device according to claim 13, 14 or 15, comprising means for transmitting the session key to a hub with which it is to establish contact, such that session control continues without restarting the authentication process with the server

17. A communications terminal device according to claim 13, 14, 15 or 16, wherein the device is a component transferable between communications handsets.
